# EUROPÄISCHE PATENTSCHRIFT

(11) **EP 1 473 486 B1**
(45) Veröffentlichungstag und Bekanntmachung des Hinweises auf die Patenterteilung: **19.07.2006**
(21) Anmeldenummer: 04009297.5
(22) Anmeldetag: 20.04.2004
(51) Int. Cl.: F16G 11/00, F16G 11/02

(54) **Seilverbindervorrichtung**
Rope connecting device
Dispositif de jonction de cable

(30) Priorität: 02.05.2003 DE 10319639
(43) Veröffentlichungstag der Anmeldung: 03.11.2004
(73) Patentinhaber: CARL STAHL GMBH, 73079 Süssen (DE)
(72) Erfinder: Emberger, Gerhard, 73079 Süssen (DE)
(74) Vertreter: Bartels & Partner

(56) Entgegenhaltungen:
- US-A- 2 574 579
- US-A- 4 302 124
- US-A- 4 771 516

## Beschreibung

Die Erfindung bezieht sich auf eine Seilverbindervorrichtung zum Festlegen von paarweise an mindestens einer Verbindungsstelle zusammengeführten, sich überkreuzenden Seilabschnitten mindestens eines Seiles als Teil der Vorrichtung, wobei die jeweilige Verbindungsstelle ein Verbindergehäuse aufweist, das zueinander quer verlaufende Durchgänge für den Durchtritt der sich überkreuzenden Seilabschnitte sowie in den Durchgängen befindliche Haltemittel zur Sicherung der Seilabschnitte gegen Verschieben in ihrer Längsrichtung aufweist.

Das Problem der Herstellung einer mechanisch belastbaren Verbindung von Seilen oder Seilabschnitten stellt sich in unterschiedlichen Anwendungsbereichen von Seilkonstruktionen. So werden beispielsweise mittels Seilverbindern in Form von Preßhülsen Verbindungsstellen an flächig ausdehnbaren, flexiblen Netzanordnungen gebildet. Derartige, bevorzugt mit Edelstahlseilen und Preßhülsen aus verzinktem Kupfer hergestellte flexible Stahlseilnetze bieten eine Vielzahl von Anwendungsmöglichkeiten, insbesondere für Architektur, Design oder Messebau, und können durch flächige, gegebenenfalls komplex aufgebaute Netze mit unterschiedlichster Krümmung zur Herstellung von ästhetisch ansprechenden Konstruktionen verwendet werden. Nur beispielhaft seien hier Zäune, Gitter, Sicherungsnetze, Geländer, Sitz- und/oder Lehnflächen von Sitzmöbeln oder andere Tragswerks- und/oder Haltestrukturen mit befestigbaren Netzen erwähnt. Besonders bei diesen Anwendungen werden hohe Ansprüche sowohl an die mechanische Belastbarkeit der Seilverbindung als auch an deren optisches Erscheinungsbild gelegt. Neben der Einschränkung der gestalterischen Freiheit durch die im wesentlichen vorgegebene Form der angesprochenen Preßhülsen ergibt sich darüber hinaus bei den vorgefertigten, in sich geschlossenen Hülsen zusätzlich das Problem des Auffädelns auf die entsprechenden Seilabschnitte, was grundsätzlich die Montage erschwert und zeitlich aufwendig werden läßt.

Bei einer Seilverbindervorrichtung der eingangs genannten Art, wie sie aus dem US Patent 4,771,516 bekannt ist, stellt sich zwar das Problem des Durchfädelns von Seilabschnitten durch geschlossene Hülsen nicht. Diese bekannte Lösung weist jedoch mehrere Nachteile auf. Bei dieser bekannten Seilverbindervorrichtung ist ein Verbindergehäuse mit halbschalenförmigen Gehäuseteilen vorgesehen, die zwischen sich die Seilabschnitte aufnehmen und mittels einer Schnapp- oder Rastverbindung miteinander verbindbar sind. Hierbei kann durch das Schließen des Gehäuses für die Seilabschnitte, die sich überkreuzend übereinander liegen, kein vollständiger Kraft- oder Reibschluß mit dem Gehäuse erreicht werden, mit der Folge, dass der Steilverbinder sich von seiner vorgegebenen Stelle löst und die gewünschte oder benötigte Verbindung zwischen den Seilabschnitten freigibt. Demgemäß sieht die bekannte Vorrichtung bei einer bevorzugten Ausführungsform weitere Mittel zur Rutschsicherung vor, etwa in Form von spitzen Dornen, die im Innenraum des Seilverbinders angebracht in das Seilmaterial eindringen und dieses dadurch verletzen. Unabhängig hiervon ist jedenfalls vorgesehen, innerhalb des Seilverbinders vorzugsweise eine Verbindungsschraube derart vorzusehen, dass die Schraube beide aneinanderliegende Seilabschnitte durchgreift und diese so innerhalb des Seilverbinders festlegt. Es wird dadurch bewußt eine Schädigung der miteinander zu verbindenden Seilabschnitte in Kauf genommen, um zu einer verläßlichen Seilverbindung zu gelangen.

Eine vergleichbare Lösung wie die zuletzt genannte ist auch durch die US 4,302,124 A aufgezeigt. Im Gegensatz zu der vorstehend beschriebenen bekannten Lösung ist zusätzlich das Verbindergehäuse, bestehend aus halbschalenförmigen Gehäuseteilen verformend verpresst; allein eine rutschsichere Verbindung für die aufgenommenen Seilabschnitte ist dergestalt gleichfalls nicht erreicht.

Durch die US 2,574,579 A ist eine Seilverbindervorrichtung bekannt, wobei die Enden zweier benachbarter Seilabschnitte als Haltemittel zur Sicherung der Seilabschnitte in einem Verbindergehäuse aufgepresste, metallische Kugeln aufweisen, die jeweils über einen Durchgang im Verbindergehäuse in dieses einsetzbar sind, wobei der Durchgang in gegenüberliegende Schlitzführungen ausmündet, deren Breite jeweils derart gewählt ist, dass der endseitige Seilabschnitt noch hindurch passt, das kugelartige-Haltemittel jedoch innerhalb des Verbindergehäuses gehalten ist. Mit der bekannten Lösung ist es weder möglich sich überkreuzende Seilabschnitte festzulegen noch diese gegen Verschieben in ihrer Längsrichtung zu sichern, sofern sich die beiden Seilenden mit ihren kugelförmigen Haltemitteln aufeinander zu bewegen sollten.

Ausgehend von diesem Stand der Technik stellt sich die Erfindung die Aufgabe, eine Seilverbindervorrichtung zu schaffen, die einfach anbringbar ist und somit einen einfachen Aufbau verschiedenster Seilkonstruktionen ermöglicht, darüber hinaus jedoch eine besonders sichere Verbindung der Seilabschnitte gewährleistet.

Bei einer Seilverbindervorrichtung der eingangs genannten Art ist diese Aufgabe erfindungsgemäß dadurch gelöst, dass für die Bildung eines Seil-Netzwerkes mit einer Mehrzahl von Verbindungsstellen auf jedem Seilabschnitt Haltekörper festgelegt sind, deren gegenseitige Abstände denjenigen der Verbindungsstellen entsprechen, und dass als Haltemittel in den Durchgängen der Verbindergehäuse Anschläge vorgesehen sind, die Anlageflächen für eine formschlüssige Sicherung der an ihnen jeweils anliegenden Haltekörper gegen Längsverschiebung bilden.

Dank der erfindungsgemäß auf jedem der Seilabschnitte angebrachten Haltekörper wird in Verbindung mit den im Verbindergehäuse vorgesehen Anschlägen nicht nur eine hoch belastbare Verbindung der Seilabschnitte ermöglicht, sondern aufgrund der Lageanordnung der Haltekörper in Abständen, die den gewünschten Abständen der Verbindungsstellen entsprechen, ergibt sich der weitere Vorteil, dass Netzwerksgeometrien besonders einfach herstellbar sind, weil die Maschengröße und/oder Form bereits bei der Vorbereitung des Seilmaterials vorgebbar ist, nämlich durch die Abstände der Haltekörper.

Bei vorteilhaften Ausführungsbeispielen können die Haltekörper auf den Seilabschnitten durch auf sie aufgepreßte, metallische Kugeln gebildet sein.

Eine besonders sichere Verbindung der sich überkreuzenden Seilabschnitte wird hierbei erreicht, wenn die Verbindergehäuse Metallklammern in Form einseitig offener Kasten aufweisen, in deren paarweise einander gegenüberliegenden Seitenwänden die Durchgänge für den Durchtritt der Seilabschnitte bildende Öffnungen vorgesehen sind, wobei die Größe der Öffnungen so bemessen ist, dass ihr Öffnungsrand die Anlageflächen der Anschläge bildet, die den Austritt der Kugeln aus dem Inneren des Verbindergehäuses verhindern.

Der Aufbau der Verbindungsstellen, d.h. die Anordnung der Seilabschnitte in den Metallklammern, gestaltet sich besonders einfach, wenn jede Seitenwand der als offener Kasten ausgebildeten Metallklammern an einem ihrer Seitenränder in einem einen Spalt für das Einlegen eines Seilabschnittes bildenden Abstand von der Ecke des Kastens endet und wenn in den Seitenwänden als Öffnungen für den Durchtritt der Seilabschnitte Schlitze vorgesehen sind, die vom geschlossenen Boden des Kastens nach oben verlaufen und seitlich zum Spalt hin offen sind. Für den Aufbau der Verbindungsstelle können die Seilabschnitte in einfacher Weise über den Spalt in den Kasten eingelegt und vom Spalt her in den angrenzenden Schlitzen verankert werden.

In besonders vorteilhafter Weise kann die Anordnung so getroffen sein, dass für den ersten, am Boden des Kastens anliegenden Seilabschnitt die Schlitze des einen betreffenden Paares der Seitenwände in einem geringeren Abstand vom Boden enden als die Schlitze des anderen Paares der Seitenwände, die vom darüberliegenden zweiten Seilabschnitt durchgriffen sind.

Vorzugsweise sind die Schlitze im Bereich ihres vom Boden des Kastens entfernt gelegenen oberen Endes durch einen an die seitliche Öffnung des Schlitzes angrenzenden, den betreffenden Seilabschnitt teilweise übergreifenden hakenartigen Niederhalteteil begrenzt, der den ersten Seilabschnitt am Boden anliegend sichert und den darüberliegenden zweiten Seilabschnitt am ersten Seilabschnitt anliegend sichert. Dadurch, dass beide sich überkreuzenden Seilabschnitte dadurch sowohl aneinander anliegend gehalten als auch am Boden des Kastens abgestützt sind, ergibt sich eine besonders zugfeste Verbindung der Seilabschnitte.

Eine besonders formschöne Gestaltung der Verbindungsstellen und damit ein ansprechendes Aussehen von betreffenden Seilkonstruktionen wird dadurch erreicht, dass eine den Kasten des Verbindergehäuses von dessen offenem Ende her passend übergreifende Haube vorgesehen ist, deren durch die Endränder ihrer Seitenwände umgrenzte, einzige offene Seite durch den Boden des übergriffenen Kastens geschlossen ist, der eine mit diesen Seitenrändern bündige Abschlußwand bildet. Das Verbindergehäuse bildet dadurch eine formschöne geschlossene Einheit aus kastenförmiger Metallklammer und aufgesetzter Haube.

Nachstehend ist die Erfindung anhand der Zeichnungen im einzelnen erläutert. Es zeigen:
- Fig. 1 eine Draufsicht auf eine Masche eines zu bildenden, flexiblen Stahlseilnetzes, vor der Herstellung der Verbindungsstellen an den Ekken der Masche, wo betreffende Seilabschnitte sich überkreuzend aufeinander liegen;
- Fig. 2 eine in vergrößertem Maßstab gezeichnete perspektivische Darstellung der Ausbildung einer Verbindungsstelle gemäß einem Ausführungsbeispiel der erfindungsgemäßen Seilverbindervorrichtung;
- Fig. 3 eine in entsprechend vergrößertem Maßstab gezeichnete perspektivische Ansicht einer Metallklammer in Form eines einseitig offenen Kastens, die Teil des Verbindergehäuses des Ausführungsbeispieles bildet;
- Fig. 4 und 5 in entsprechend vergrößertem Maßstab gezeichnete perspektivische Ansichten einer Haube als Bestandteil des Verbindergehäuses, in Untenansicht bzw. in Draufsicht, und
- Fig. 6 eine der Fig. 1 ähnliche Darstellung einer Masche eines zu bildenden Stahlseilnetzes mit gegenüber Fig. 1 veränderter Maschengeometrie.

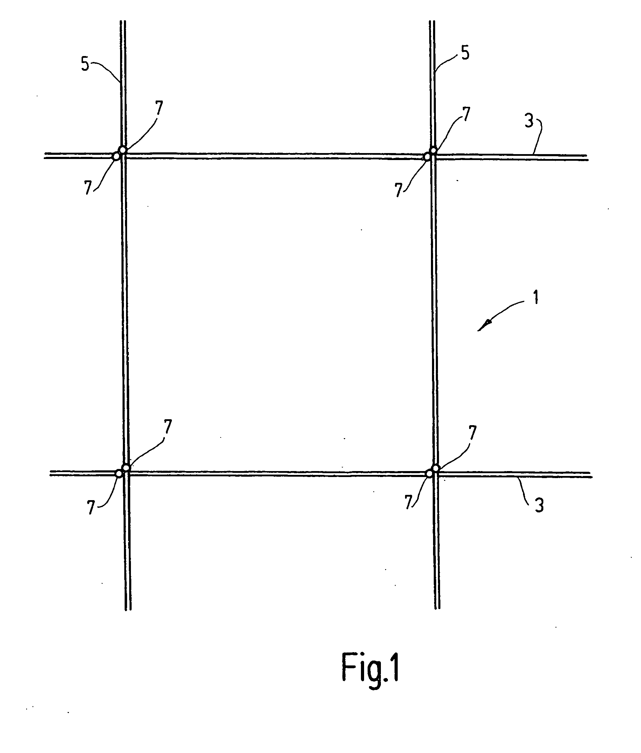

Die Draufsicht in Fig. 1 zeigt von einem zu bildenden flexiblen Stahlnetz lediglich eine als Ganzes mit 1 bezeichnete Masche quadratischer Maschenform, gebildet aus in der Zeichnung horizontal verlaufenden Seilabschnitten 3 und in der Zeichnung vertikal verlaufenden Seilabschnitten 5. Die Seilabschnitte 3 und 5 weisen für die Herstellung von Verbindungsstellen, wo die Seilabschnitte 3 und 5, sich überkreuzend, an den Ecken der Maschen 1 übereinander liegen, jeweils fest auf ihnen angebrachte Haltekörper in Form von Kugeln 7 auf, Hierbei handelt es sich beim vorliegenden Beispiel um aufgepreßte Metallkugeln, beispielsweise aus einer Messinglegierung. Bei einem Beispiel mit Seilabschnitten 3, 5 in Form von Stahlseilen mit 2 mm Durchmesser können die Kugeln 7 beispielsweise einen Durchmesser von 4 mm besitzen.

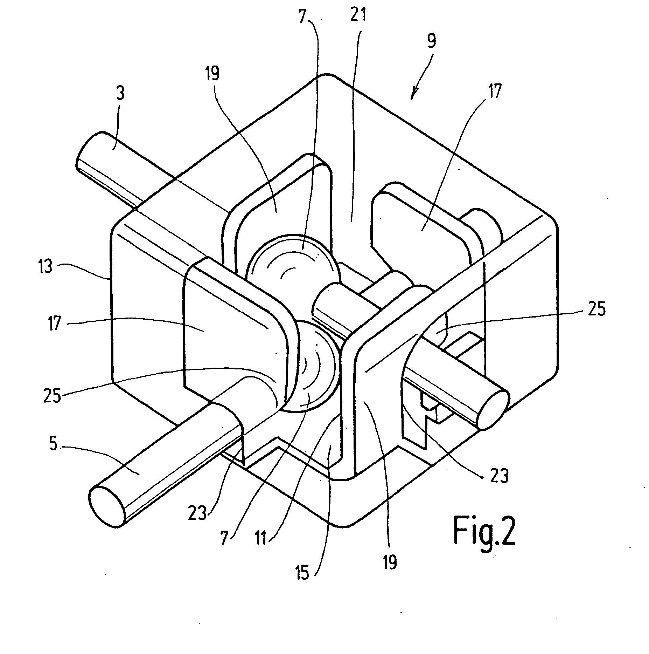

Fig. 2 zeigt nähere Einzelheiten der Ausbildung einer Verbindungsstelle gemäß einem Ausführungsbeispiel der erfindungsgemäßen Seilverbindervorrichtung. Diese weist ein als Ganzes mit 9 bezeichnetes Verbindergehäuse auf, das aus zwei Bauteilen gebildet ist, nämlich aus einer Metallklammer 11 in Form eines einseitig offenen Kastens und einer auf die offene Seite der kastenartigen Metallklammer 11 aufgesteckten Abdeckhaube 13. Diese ist in Fig. 2 zum Zweck der Sichtbarkeit des Innenraumes des Verbindergehäuses 9 als durchsichtiges Bauteil dargestellt. In der praktischen Ausführung handelt es sich bei der Haube 13 vorzugsweise jedoch um ein preßgeformtes, undurchsichtiges Kunststoffteil.

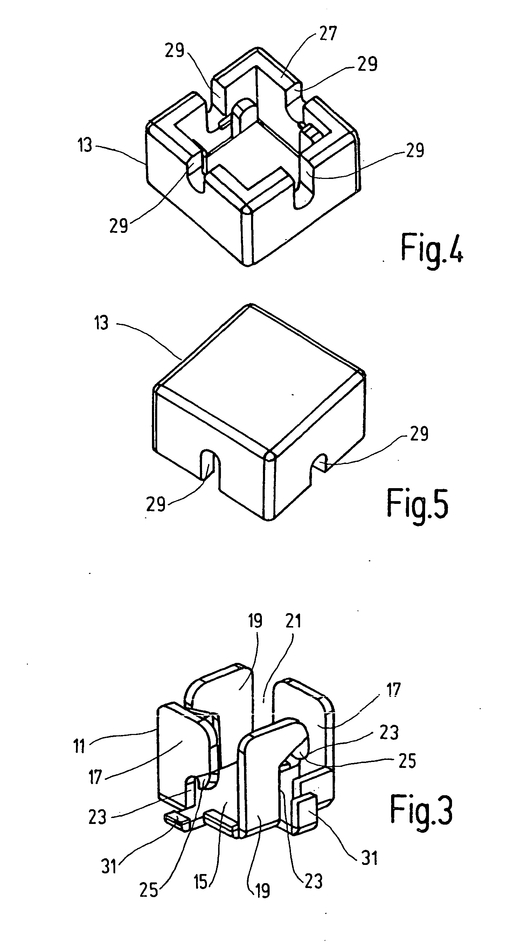

Die Einzelheiten der Metallklammer 11 sind aus Fig. 3 deutlich ersichtlich. Wie gezeigt, hat sie die Form eines Kastens mit geschlossenem Boden 15, einer dem Boden 15 gegenüberliegenden, offene Seite sowie paarweise einander gegenüberliegenden Seitenwänden 17 und 19. Jede dieser Seitenwände 17 und 19 endet an einem ihrer Seitenränder in einem Abstand von der Ecke des von der Metallklammer 11 gebildeten Kastens, so dass an jeder Ecke jeweils ein Spalt 21 gebildet ist, über den von der offenen Seite des Kastens her Seilabschnitte 3 und 5 in die Metallklammer 11 so einlegbar sind, dass sich, wie dies in Fig. 2 deutlich ersichtlich ist, die Kugeln 7 beider Seilabschnitte 3 und 5 innerhalb der Metallklammer 11 befinden.

Jedes Paar der Seitenwände 17 und 19 weist für den Durchtritt der Seilabschnitte 3, 5 einen sich vom Boden 15 nach oben erstreckenden Schlitz 23 auf, der zum Spalt 21 hin seitlich offen ist. Am oberen Schlitzende bildet jede Seitenwand 17 und 19 einen hakenartigen Niederhalteteil 25, der den betreffenden, im Schlitz 23 befindlichen Seilabschnitt 3, 5 teilweise übergreift. Dadurch sind die sich überkreuzenden Seilabschnitte 3 und 5 sicher in Anlage aneinander und am Boden 15 der Metallklammer 11 gehalten.

Wie insbesondere aus Fig. 3 zu ersehen ist, ist die Länge der Schlitze 23, gerechnet vom Boden 15 der Metallklammer 11 aus, unterschiedlich gewählt, d.h. bei den Seitenwänden 17 mit geringerer Länge, weil diese Seitenwände 17 den Durchtritt des am Boden 15 anliegenden Seilabschnittes 5 bilden. Die lichte Weite der Schlitze 23 ist jeweils an die Stärke der Seilabschnitte 3, 5 angepaßt, so dass die Schlitzränder Anlageflächen von Anschlägen bilden, um die Kugeln 7 der Seilabschnitte 3, 5 formschlüssig gegen Austritt aus der Metallklammer 11 zu sichern. Zugkräfte, welche die Kugeln 7 ins Zentrum der Metallklammer 11 zu ziehen suchen, werden durch Anlage der Kugeln 7 aneinander und am Seil des benachbarten Seilabschnittes 3, 5 aufgenommen, so dass die Verbindungsstelle gegen Zugbelastungen in beiden Richtungen gesichert ist.

Wie Fig. 2, 4 und 5 zeigen, ist die kastenartige Metallklammer 11 durch eine von der offenen Seite her aufgesteckte Haube 13 abgedeckt, die vorzugsweise mittels eines Befestigungsclips unter Bildung des verschließbaren Verbindergehäuses 9 zusammenfügbar sind. Deren in Fig. 4 zu sehende, einzige offene Seite 27 ist, wenn die Haube 13 auf die Metallklammer 11 aufgesteckt ist, durch deren geschlossenen Boden 15 bündig geschlossen, so dass das Verbindergehäuse 9 eine geschlossene, optisch ansprechende Einheit bildet. Die Seitenwände der Haube 13 weisen in Entsprechung zu den Schlitzen 23 der Metallklammer 11 Schlitzöffnungen 29 für den Durchtritt der Seilabschnitte 3 und 5 auf, wobei die Schlitzöffnungen 29 in den einander gegenüberliegenden Paaren der Seitenwände der Haube 13 wiederum eine unterschiedliche Länge besitzen, entsprechend der zugeordneten Schlitze 23 der Metallklammer 11. Wie aus Fig. 3 zu ersehen ist, sind vom Boden 15 der Metallklammer 11 vorspringende Nasen 31 vorgesehen, die bei in Stellung gebrachter Haube 13 die Schlitzöffnungen 29 in dem an den Boden 15 angrenzenden Bereich, der nicht vom durchtretenden Seilabschnitt 3, 5 beansprucht wird, verschließen. Das Verbindergehäuse 9 hat somit eine allseits geschlossene Form.

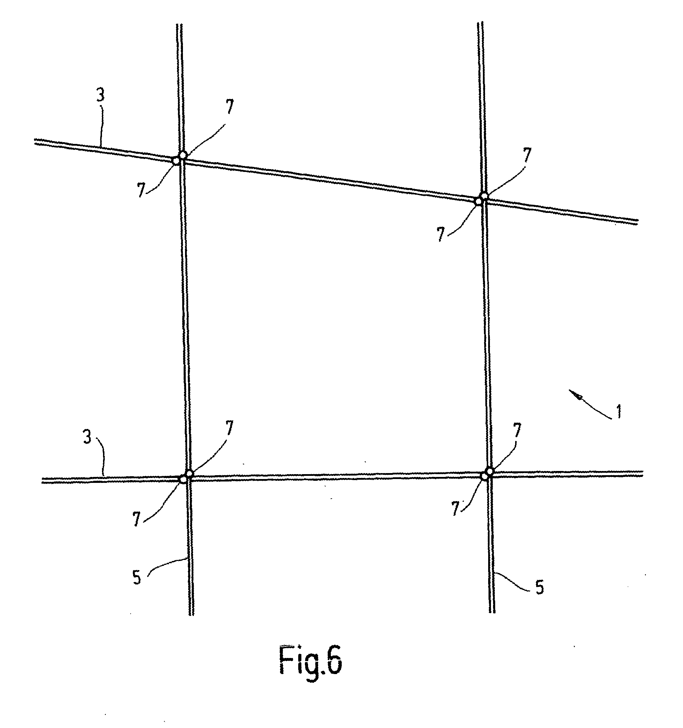

Fig. 6 zeigt ein zu bildendes Seil-Netzwerk mit einer Masche 1 mit einer von der Quadratform abweichenden Geometrie. Die entsprechende Maschengeometrie ergibt sich auf einfache Weise dadurch, dass die Kugeln 7 auf entsprechenden Seilabschnitten 3 und/oder 5 in unterschiedlichen, vorgegebenen Abständen angebracht werden, so dass entsprechend gewünschte Maschenformen ohne weiteres Zutun beim Herstellen der Verbindungsstellen gebildet werden. Die zu verbindenden Seilabschnitte können senkrecht zueinander in der Metallklammer 11 aufgenommen sein aber auch schrägverlaufend, wie teilweise in der Fig.6 dargestellt. Vorzugsweise sind jedoch die Durchgänge 23 senkrecht zueinander verlaufend im Verbindergehäuse 9 angeordnet. Die genannten Seilabschnitte 3,5 sind, wie bereits dargelegt, durch ihrerseits am jeweiligen Seil befestigte Haltekörper 7 begrenzt sowie in den Durchgängen 23 des Verbindungsgehäuses 9 beidseits zu den Haltekörpern 7 jeweils angeordneten Anschlägen, so dass sich dergestalt eine formschlüssige Sicherung gegen eine Längsverschiebung der Seile oder Seilabschnitte ergibt.

Wenn es sich bei den als Haltekörpern vorgesehenen Kugeln 7 um solche handelt, die sich vom benutzten Stahiseii optisch auffällig unterscheiden, beispielsweise aus einer besonderen Metallegierung gebildet oder mit einer optisch wirksamen Oberflächenbeschichtung versehen sind, können zusätzlich zu den für die Ausbildung der Verbindungsstellen vorgesehenen Kugeln zusätzliche Kugeln oder andersartige Körper auf den Seilabschnitten als Ornamente vorgesehen sein.

## Patentansprüche

1. Seilverbindervorrichtung zum Festlegen von paarweise an mindestens einer Verbindungsstelle zusammengeführten, sich überkreuzenden Seilabschnitten (3 und 5) mindestens eines Seiles als Teil der Vorrichtung, wobei die jeweilige Verbindungsstelle ein Verbindergehäuse (9) aufweist, das zueinander quer verlaufende Durchgänge (23) für den Durchtritt der sich überkreuzenden Seilabschnitte (3, 5) sowie in den Durchgängen befindliche Haltemittel zur Sicherung der Seilabschnitte gegen Verschieben in ihrer Längsrichtung aufweist, **dadurch gekennzeichnet, dass** für die Bildung eines Seil-Netzwerkes mit einer Mehrzahl von Verbindungsstellen auf jedem Seilabschnitt (3, 5) Haltekörper (7) festgelegt sind, deren gegenseitige Abstände denjenigen der Verbindungsstellen entsprechen, und dass als Haltemittel in den Durchgängen (23) der Verbindergehäuse (9) Anschläge vorgesehen sind, die Anlageflächen für eine formschlüssige Sicherung der an ihnen jeweils anliegenden Haltekörper (7) gegen Längsverschiebung bilden.

2. Seilverbindervorrichtung nach Anspruch 1, **dadurch gekennzeichnet, dass** die Haltekörper auf den Seilabschnitten (3, 5) durch auf sie aufgepreßte, metallische Kugeln (7) gebildet sind.

3. Seilverbindervorrichtung nach Anspruch 1, **dadurch gekennzeichnet, dass** die Verbindergehäuse (9) Metallklammern in Form einseitig offener Kasten (11) aufweisen, in deren paarweise einander gegenüberliegenden Seitenwänden (17, 19) die Durchgänge für den Durchtritt der Seilabschnitte (3, 5) bildende Öffnungen (23) vorgesehen sind, und dass die Größe der Öffnungen (23) so bemessen ist, dass ihr Öffnungsrand die Anlageflächen der Anschläge bildet, die den Austritt der Kugeln (7) aus dem Inneren des Verbindergehäuses (9) verhindern.

4. Seilverbindervorrichtung nach Anspruch 3, **dadurch gekennzeichnet, dass** jede Seitenwand (17 und 19) an einem ihrer Seitenränder in einem einen Spalt (21) für das Einlegen eines Seilabschnittes (3 oder 5) bildenden Abstand von der Ecke des Kastens (11) endet und dass in den Seitenwänden (17, 19) als Öffnungen für den Durchtritt der Seilabschnitte (3, 5) Schlitze (23) vorgesehen sind, die vom geschlossenen Boden (15) des Kastens (11) nach oben verlaufen und seitlich zum Spalt (21) hin offen sind.

5. Seilverbindervorrichtung nach Anspruch 4, **dadurch gekennzeichnet, dass** für den ersten, am Boden (15) des Kastens (11) anliegenden Seilabschnitt (5) die Schlitze (23) des einen betreffenden Paares (17) der Seitenwände in einem geringeren Abstand vom Boden (15) enden als die Schlitze (23) des anderen Paares (19) der Seitenwände, die vom darüberliegenden zweiten Seilabschnitt (3) durchgriffen sind.

6. Seilverbindervorrichtung nach Anspruch 5, **dadurch gekennzeichnet, dass** die Schlitze (23) im Bereich ihres vom Boden (15) des Kastens (11) entfernt gelegenen oberen Endes durch einen an die seitliche Öffnung des Schlitzes (23) angrenzenden, den betreffenden Seilabschnitt (3, 5) teilweise übergreifenden hakenartigen Niederhalteteil (25) begrenzt sind, der den ersten Seilabschnitt (5) am Boden (15) anliegend sichert und den darüberliegenden zweiten Seilabschnitt (3) am ersten Seilabschnitt (5) anliegend sichert.

7. Seilverbindervorrichtung nach einem der Ansprüche 3 bis 6, **dadurch gekennzeichnet, dass** eine den Kasten (11) des Verbindergehäuses (9) von dessen offenem Ende her passend übergreifende Haube (13) vorgesehen ist, deren durch die Endränder ihrer Seitenwände umgrenzte, einzige offene Seite (27) durch den Boden (15) des übergriffenen Kastens (11) geschlossen ist , der eine mit diesen Seitenrändern bündige Abschlußwand bildet.

8. Seilverbindervorrichtung nach Anspruch 7, **dadurch gekennzeichnet, dass** in den Seitenwänden der Haube (13) für den Durchtritt der Seilabschnitte (3, 5) Schlitzöffnungen (29) vorgesehen sind, die an den die offene Seite der Haube (13) umgebenden Endrändern der Seitenwände münden und deren Länge, entsprechend der unterschiedlichen Abmessungen der Schlitze (23) in den Seitenwänden des Kastens (11), in einem Paar der Seitenwände der Haube eine geringere Länge als im anderen Paar der Seitenwände der Haube besitzen.

9. Seilverbindervorrichtung nach Anspruch 8, **dadurch gekennzeichnet, dass** vom Boden (15) des Kastens (11) in die Schlitzöffnungen (29) der Seitenwände der übergreifenden Haube (13) vorspringende Nasen (31) vorgesehen sind, deren Länge jeweils der unterschiedlichen Länge der Schlitzöffnungen (29) der Paare der Seitenwände der Haube (13) gangepaßt ist.

## Claims

1. Rope connector means for affixing crossing rope sections (3 and 5) of at least one rope brought together in pairs in at least one connection point as a part of the means, whereby the relevant connection point comprises a connector housing (9) comprising openings (23) extending transverse to one another, through which the crossing rope sections (3, 5) penetrate, as well as holding means provided in the openings for securing the rope sections against displacement in a longitudinal direction, **characterised in that** holding bodies (7) are affixed for forming a rope net with a multitude of connection points on each rope section (3, 5), whose distances from each other equal those of the connection points, and **in that** shoulders are envisaged as holding means in the openings (23) of the connector housing (9), forming abutment surfaces for securing the relevant holding bodies (7) abutting against the same by means of form closure against longitudinal displacement.

2. Rope connector means according to Claim 1, **characterised in that** the holding bodies are formed on the rope sections (3, 5) by metallic spheres (7) pressed onto the same.

3. Rope connector means according to Claim 1, **characterised in that** the connector housing (9) comprises metal clips in the form of boxes (11) open at one side, in which pairs of opposite side walls (17, 19) are envisaged as openings (23) for inserting the rope sections (3, 5), and **in that** the size of the openings (23) is designed in such a way that their opening edge forms the abutment surfaces of the shoulders which prevent the spheres (7) from slipping out of the interior of the connector housing (9).

4. Rope connector means according to Claim 3, **characterised in that** each side wall (17 and 19) ends in a gap (21) for inserting a rope section (3 or 5) with one of its side edges at a distance from the corner of the box (11), and **in that** openings for inserting the rope sections (3, 5) in the form of slots (23) are envisaged in the side walls (17, 19), which project upwards from the floor (15) of the box (11) and are open at the side facing the gap (21).

5. Rope connector means according to Claim 4, **characterised in that** the slots (23) of one of the relevant pairs (17) of side walls end closer to the floor (15) for the first rope section (5) lying on the floor (15) of the box (11) than the slots (23) of the other pair (19) of side walls which are engaged by the overlaying second rope section (3).

6. Rope connector means according to Claim 5, **characterised in that** the slots (23) are delimited by a hook-like holding part (25) partially straddling the relevant rope section (3, 5) in the area of the their upper end positioned at a distance from the floor (15) of the box (11) adjacent to the side opening of the slot (23), the same abutting against and securing the first rope section (5) on the floor (15), and abutting against and securing the overlaying second rope section (3) on the first rope section (5).

7. Rope connector means according to one of the Claims 3 to 6, **characterised in that** a cover (13) straddling the box (11) of the connector housing (9) from the open end of the same is envisaged, the only open side (27) of which, delimited by the end edges of its side walls, is closed by the floor (15) of the straddled box (11) which forms a flush closing wall with the same.

8. Rope connector means according to Claim 7, **characterised in that** slot openings (29) are envisaged in the side walls of the cover (13) for inserting the rope sections (3, 5), which open out into the end edges of the side walls delimiting the open side of the cover (13), the lengths of which equal the various dimensions of the slots (23) in the side walls of the box (11), and which are of a shorter length in one pair of the side walls of the cover than in the other pair of the side walls of the cover.

9. Rope connector means according to Claim 8, **characterised in that** lugs (31) projecting from the floor (15) of the box (11) into the slot openings (29) of the side walls of the straddling cover (13) are envisaged, the lengths of which each equal the various lengths of the slot openings (29) in the pairs of side walls of the cover (13).

## Revendications

1. Dispositif de jonction de câbles pour fixer des segments de câble (3 et 5) - qui se croisent et sont rassemblés par paires à au moins un point de jonction - d'au moins un câble qui fait partie du dispositif, chaque point de jonction étant équipé d'un boîtier de jonction (9) muni de passages (23) transversaux les uns par rapport aux autres pour faire passer les segments de câble (3, 5) qui se croisent et muni de moyens de maintien placés dans les passages et destinés à protéger les segments de câble contre un déplacement dans leur direction longitudinale,
**caractérisé en ce que** des corps de maintien (7), dont les distances mutuelles correspondent à celles des points de jonction, sont fixés pour former un réseau de câbles comportant une pluralité de points de jonction sur chaque segment de câble (3, 5) et **en ce que** des butées sont prévues dans les passages (23) des boîtiers de jonction (9) en tant que moyens de maintien, butées qui forment des surfaces de contact pour que les corps de maintien (7) qui y sont appliqués soient protégés par combinaison de formes contre un déplacement longitudinal.

2. Dispositif de jonction de câbles selon la revendication 1, **caractérisé en ce que** les corps de maintien sur les segments de câble (3, 5) sont formés par des billes (7) métalliques compressées sur eux.

3. Dispositif de jonction de câbles selon la revendication 1, **caractérisé en ce que** les boîtiers de jonction (9) comportent des griffes métalliques sous forme de boîtes (11), ouvertes d'un côté, dont des parois latérales (17, 19), qui se font face par paires comportent les ouvertures (23) formant des passages pour faire passer les segments de câble (3, 5) et **en ce que** la dimension des ouvertures (23) est telle que leur bord d'ouverture forme les surfaces de contact des butées, qui empêchent les billes (7) de sortir de l'intérieur du boîtier de jonction (9).

4. Dispositif de jonction de câbles selon la revendication 3, **caractérisé en ce que** chaque paroi latérale (17 et 19) sur l'un de ses bords latéraux se termine, à partir du coin de la boîte (11), à une distance qui forme un intervalle (21) pour introduire un segment de câble (3 ou 5) et **en ce que**, afin de servir d'ouvertures pour faire passer les segments de câble (3, 5), dans les parois latérales (17, 19), sont prévues des fentes (23) qui s'étendent depuis le fond (15) fermé de la boîte (11) vers le haut et qui sont ouvertes de côté vers l'intervalle (21).

5. Dispositif de jonction de câbles selon la revendication 4, **caractérisé en ce que**, pour le premier segment de câble (5) appliqué au fond (15) de la boîte (11), les fentes (23) de l'une des paires (17) concernées des parois latérales se terminent à plus petite distance du fond (15) que les fentes (23) de l'autre paire (19) de parois latérales traversées par le deuxième segment de câble (3) placé par-dessus.

6. Dispositif de jonction de câbles selon la revendication 5, **caractérisé en ce que**, dans la zone de leur extrémité supérieure qui est éloignée du fond (15) de la boîte (11), les fentes (23) sont limitées par une pièce de retenue (25), en forme de crochet, qui délimite l'ouverture latérale de la fente (23) et recouvre en partie le segment de câble (3, 5) concerné et qui assure que le premier segment de câble (5) touche le fond (15) et que le deuxième segment de câble (3) touche le premier segment de câble (5).

7. Dispositif de jonction de câbles selon l'une des revendications 3 à 6, **caractérisé en ce qu'**on prévoit un capot (13) qui recouvre de manière ajustée la boîte (11) du boîtier de jonction (9) depuis son extrémité ouverte et dont le côté (27) ouvert unique délimité par les bords terminaux de ses parois latérales est fermé par le fond (15) de la boîte (11) recouverte, ce fond formant une paroi terminale qui affleure à ces bords latéraux.

8. Dispositif de jonction de câbles selon la revendication 7, **caractérisé en ce que**, pour faire passer les segments de câble (3, 5) dans les parois latérales du capot (13), on prévoit des ouvertures en fente (19) qui débouchent sur les parois latérales, à savoir leurs bords terminaux qui entourent le côté ouvert du capot (13), et qui, en fonction des différentes dimensions des fentes (23) dans les parois latérales de la boîte (11), sont moins longues dans une paire des parois latérales du capot que dans l'autre paire de parois latérales du capot.

9. Dispositif de jonction de câbles selon la revendication 8, **caractérisé en ce qu'**on prévoit des becs (31) qui, depuis le fond (15) de la boîte (11), dépassent dans les ouvertures en fente (29) des parois latérales du capot (13) de recouvrement et qui ont une longueur ajustée à chacune des longueurs différentes des ouvertures en fente (29) des paires de parois latérales du capot (13).
